# EUROPÄISCHE PATENTANMELDUNG

(11) **EP 1 006 737 A2**
(43) Veröffentlichungstag der Anmeldung: **07.06.2000**
(21) Anmeldenummer: 99123905.4
(22) Anmeldetag: 01.12.1999
(51) Int. Cl.: H04Q 3/00

(54) **Signalisierung der unterstützden Leistungsmerkmale zwischen Netzknoten eines Telekommunikationsnetzes**

(30) Priorität: 01.12.1998 DE 19855491
(71) Anmelder: SIEMENS AKTIENGESELLSCHAFT, 80333 München (DE)
(72) Erfinder: Wiehe, Ulrich, 36251 Bad Hersfeld (DE)

(57) **Zusammenfassung**

Zur Signalisierung der Unterstützung netzbezogener Leistungsmerkmale zwischen einem Ausgangsnetzknoten und einem Zielnetzknoten eines Telekommunikationsnetzes wird von dem Ausgangsknoten aufgrund der in diesem unterstützten Leistungsmerkmale eine Signalisierungsnachricht erstellt und an den Zielknoten gesendet. Die Signalisierungsnachricht enthält eine die vollständige Unterstützung eines vorbestimmten Satzes von Leistungsmerkmalen verneinende Stadieninformation, jedoch zudem eine Erweiterungsinformation, welche das Vorliegen einzelner Leistungsmerkmale dieses Satzes anzeigt. Nach Empfang der Nachricht seitens des Zielknotens wird diese, falls sie eine die vollständige Unterstützung des Satzes verneinende Stadieninformation enthält, auf das Vorhandensein zumindest einer Erweiterungsinformation überprüft; sofern dies zutrifft, wird die Erweiterungsinformation ausgewertet und die entsprechenden Leistungen werden als verwendbar gekennzeichnet.

## Beschreibung

Die Erfindung betrifft ein Verfahren zur Signalisierung der Unterstützung netzbezogener Leistungsmerkmale seitens eines Ausgangsnetzknotens eines Telekommunikationsnetzes, bei welchem von dem Ausgangsnetzknoten aufgrund der in diesem unterstützten Leistungsmerkmale eine Signalisierungsnachricht erstellt wird, welche zumindest eine die vollständige Unterstützung eines vorbestimmten Satzes von Leistungsmerkmalen betreffende Stadieninformation enthält, und die Signalisierungsnachricht an einen oder mehrere andere Ziel-Netzknoten gesendet und von diesen empfangen und ausgewertet wird.

Ebenso betrifft die Erfindung einen Netzknoten für ein Telekommunikationsnetz, welcher zum Senden und/oder zum Empfangen von Signalisierungsnachrichten eingerichtet ist, welche zumindest eine Stadieninformation betreffend die vollständige Unterstützung eines vorbestimmten Satzes netzbezogener Leistungsmerkmale im Netzknoten bzw. auf seiten eines anderen Ausgangsnetzknotens enthalten.

Telekommunikationsnetze, insbesondere Telefonnetze, sind als Festnetze oder Mobilfunknetze ausgebildet und weisen untereinander vernetzte Vermittlungseinrichtungen und andere Netzknoten auf, welche dem Aufbau und Erhalt von Gesprächsverbindungen zwischen den Teilnehmern eines Netzes und der Steuerung und Verwaltung dieser Funktionen sowie im Netz realisierter Zusatzdienste dienen. In Mobilfunknetzen sind an die Vermittlungseinrichtungen jeweils Basisstationen angeschlossen, mit deren Hilfe über eine Luftschnittstelle Telekommunikationsendgeräte anschließbar sind. Diese Endgeräte ermöglichen einem Teilnehmer eines Mobilnetzes den Netzzugang. Die Vermittlungseinrichtungen sind darüber hinaus auch für den Übergang zu weiteren Netzen, z.B. einem Datenübertragungsnetz oder einem Festnetz, eingerichtet.

Ein Beispiel für ein Mobilfunknetz ist das bekannte GSM-Netz ('Global System for Mobile communications'), das im folgenden als ein Beispiel zur Erläuterung der der Erfindung zugrundeliegenden Aufgabenstellung herangezogen werden soll. Aus dem GSM-Netz ist es bekannt, innerhalb eines Mobilnetzes in den Netzknoten Speichereinheiten, in denen jeweils teilnehmerspezifische Daten zu den netzeigenen Diensten gespeichert sind, zu realisieren. Eine dieser Speichereinheiten stellt das sogenannte Heimatregister (HLR, 'Home Location Register') dar, das sich in der Regel an einem fest definierten Ort befindet und in dem die der Registrierung des Teilnehmers zugrundeliegenden Daten abgelegt sind. Für den mobilen Teilnehmer und der mit ihm in Verbindung stehenden Basisstation ist eine Speichereinheit als sogenanntes Besucherregister (VLR, 'Visiting Location Register') vorgesehen, in dem die teilnehmer- und verbindungsspezifischen Daten abgelegt sind und das gewöhnlich in einem Mobilvermittlungsknoten (MSSP, 'Mobile Service Switching Point') realisiert ist. Je nach Aufenthaltsort des mobilen Teilnehmers wechselt auch die Speichereinheit für das Besucherregister bzw. der Vermittlungsknoten. Weitere Informationen zum GSM-Netz können beispielsweise aus 'Mobilfunk und Intelligente Netze', 2. Auflage, Friedrich Vieweg & Sohn Verlagsgesellschaft mbH, Braunschweig/Wiesbaden, 1995, entnommen werden.

Des weiteren ist aus den ETSI-Spezifikationen GSM 03.78, GSM 09.78 und GSM 09.02., eine sogenannte CAMEL Plattform ('Customized Application for Mobile network Enhanced Logic') bekannt, mit der die Unterstützung von zusätzlichen anbieterspezifischen Diensten für Teilnehmer auch netzübergreifend ermöglicht werden soll. Die Leistungsmerkmale, die unter CAMEL vorgesehen sind, sind in als CAMEL-Phasen bezeichnete Stadien gestaffelt, z.B. Phase 1, Phase 2, Phase 3, von denen jeweils ein Stadium die Leistungsmerkmale der vorhergehenden einschließt; z.B. enthält Phase 2 sämtliche Leistungsmerkmale der Phase 1 sowie zusätzliche Leistungsmerkmale.

CAMEL Phase 1 sieht einen Grundumfang von Leistungsmerkmalen vor, der insbesondere die Behandlung von abgehenden und einlangenden Rufen und das Routing betrifft. Der unter CAMEL Phase 2 verlangte, zusätzliche Leistungsumfang ist demgegenüber sehr weit und kann in vielen Fällen aufgrund begrenzter Entwicklungskapazität beim Hersteller von GSM-Komponenten nicht genügend schnell in einem Schritt entwickelt werden. Es ist daher sinnvoll, den Leistungsumfang der Phase 2 in einen Satz von Leistungsmerkmalen zu unterteilen und zunächst nur einige dieser Leistungsmerkmale zu realisieren. Dies stellt für Hersteller derartiger Systeme einen wichtigen Gesichtspunkt dar.

Im Sinne des genannten GSM-Standards repräsentiert die CAMEL Phase 2 ein 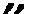 Gesamt-Leistungsmerkmal", das von den GSM-Einheiten in seiner Gesamtheit entweder unterstützt oder nicht unterstützt wird. In den vom GSM-Standard festgelegten Signalisierungsnachrichten, mit denen ein Mobilvermittlungsknoten das Heimatregister informiert, ob sie die CAMEL Phase 2 unterstützt, ist nicht vorgesehen, daß eine teilweise Unterstützung angezeigt werden kann.

Gemäß dem standardisierten Signalisierungsprotokoll darf ein Mobilvermittlungsknoten, welcher anstelle des gesamten Leistungsumfangs nur einige der Leistungsmerkmale der CAMEL Phase 2 unterstützt, dem Heimatregister weder anzeigen, es unterstütze die Phase 2 (dies hieße ja in vollem Umfang), noch kann dem Heimatregister angezeigt werden, welche der Leistungsmerkmale der Phase 2 in dem Mobilvermittlungsknoten unterstützt werden und welche nicht. Der Vermittlungsknoten muß somit dem Heimatregister signalisieren, daß CAMEL Phase 2 nicht unterstützt wird. Das Heimatregister, das diese Information erhält, wird vom Vermittlungsknoten folglich keine Funktionalität der CAMEL Phase 2 anfordern, auch nicht jene Leistungsmerkmale, die im Vermittlungsknoten realisiert sind. Dies bedeutet, daß die einzelnen Leistungsmerkmale der Phase 2 in dem Mobilvermittlungsknoten als Besucherregister oder als Gateway nicht genutzt werden können, wenn nicht der volle Umfang der CAMEL Phase 2 implementiert worden ist.

Wie an dem Beispiel der CAMEL-Phasen des GSM-Netzes veranschaulicht, können einzelne in einem Netzknoten implementierte Leistungsmerkmale nicht genutzt werden, wenn diese zu einem Satz von Leistungsmerkmalen gehören und dieser Satz nicht in seiner Gesamtheit unterstützt wird, weil - z.B. aufgrund eines Standards oder einer anderen verbindlichen Vereinbarung - verlangt wird, daß in den zwischen den Netzknoten ausgetauschten Signalisierungsnachrichten die Unterstützung von Leistungsmerkmalen in Bezug auf einen derartigen Satz von Leistungsmerkmalen als ganzes (wie etwa die Leistungsmerkmale einer CAMEL-Phase) angezeigt wird. Die die Unterstützung eines solchen Leistungsmerkmal-Satzes betreffende Information wird im folgenden als Stadieninformation bezeichnet.

Es ist daher Aufgabe der Erfindung, diesem Mangel abzuhelfen und die Verwendung einzelner Merkmale in Abhängigkeit von deren Unterstützung durch die beteiligten Netzknoten zu ermöglichen. Dies soll jedoch so erfolgen, daß eine Kompatibilität mit dem Standard gewahrt bleibt.

Diese Aufgabe wird durch ein Verfahren der eingangs genannten Art gelöst, bei welchem erfindungsgemäß
- seitens des Ausgangsnetzknotens die Signalisierungsnachricht zwar mit einer die vollständige Unterstützung des Satzes verneinenden Stadieninformation, jedoch mit zumindest einer Erweiterungsinformation, welche jeweils das Vorliegen eines Leistungsmerkmales dieses Satzes anzeigt, erstellt wird (Erstellvorgang) und/oder
- die seitens eines Zielnetzknotens empfangene Signalisierungsnachricht, falls sie eine die vollständige Unterstützung des Satzes verneinende Stadieninformation enthält, auf das Vorhandensein zumindest einer Erweiterungsinformation überprüft wird und, sofern dies zutrifft, die zumindest eine Erweiterungsinformation ausgewertet wird (Auswertevorgang).

Hierbei sieht die Erfindung grundsätzlich vor, daß der Ersteilvorgang seitens des Ausgangsnetzknotens und der Auswertevorgang seitens des Zielnetzknotens nach der genannten Art erfolgt; nur dann ist naturgemäß eine Verständigung über die unterstützten Leistungsmerkmal nach der Erfindung möglich. Wenn jedoch nur der Ausgangsnetzknoten oder nur der Zielnetzknoten nach der Erfindung ausgeführt ist, der andere Netzknoten jedoch nach bekannter Art, so wird dementsprechend lediglich der Erstellvorgang oder der Auswertevorgang nach der Erfindung durchgeführt, während der andere Netzknoten nach bekannter Art an der Signalisierung teilnimmt. Es liegt einer der Vorteile der Erfindung darin, daß es nicht erforderlich ist, daß sowohl der Ausgangs- als auch der Zielnetzknoten der Erfindung folgen, sondern mit einer bekannten Signalisierung bzw. mit Netzknoten bekannter Art kompatibel sind.

Durch die Verwendung von erweiterter Information in der Signalisierungsnachricht kann der Ausgangsnetzknoten sich gegenüber jedem Zielnetzknoten, gleich ob dieser die Erweiterung 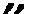 versteht" oder nicht, in gleicher Weise verhalten, ohne dadurch gegen den Standard zu verstoßen, obgleich nur einzelne der Leistungsmerkmale eines Satzes (wie beispielsweise jene der CAMEL Phase 2) nutzbar unterstützt werden. Die Lösung ermöglicht die schrittweise Implementierung von Leistungsmerkmalen verschiedener Stadien und insbesondere deren Nutzbarkeit auf seiten des Zielnetzknotens. Dies gestattet somit eine schnelle, wenn auch nur teilweise, Einführung durch den Betreiber. Darüber hinaus ist es möglich, daß Betreiber, die einzelne Leistungsmerkmale nicht einführen wollen, diese auch nicht vom Hersteller übernehmen bzw. kaufen müssen.

In einer bevorzugten Ausführungsform der Erfindung, welche insbesondere dort anwendbar ist, wo die Signalisierung nach einem standardisierten Protokoll erfolgt, und hierbei eine Erweiterung des Signalisierungsumfangs ohne Verletzung dieses Protokolles ermöglicht, wird die Erweiterungsinformation einem für über das Protokoll hinausgehende Erweiterungen vorgesehenen Teil der Signalisierungsnachricht eingesetzt bzw. entnommen.

Es ist insbesondere günstig, wenn die Signalisierung in einem GSM-Netz nach einem Protokoll eines CAMEL-Standards erfolgt und die Stadieninformation die Unterstützung der Leistungsmerkmale einer CAMEL-Phase, z.B. CAMEL Phase 2, betrifft.

Die Aufgabe wird des weiteren ausgehend von einem zum Senden von Signalisierungsnachrichten eingerichteten Netzknoten der eingangs genannten Art von einem Netzknoten mit einer Erstelleinrichtung zum Erstellen von Signalisierungsnachrichten, welche zwar eine vollständige Unterstützung des Satzes verneinen, jedoch zumindest eine Erweiterungsinformation, welche jeweils das Vorliegen eines Leistungsmerkmales dieses Satzes anzeigt, enthalten, sowie mit einer Sendeeinrichtung zum Senden der Signalisierungsnachrichten an einen oder mehrere andere Zielnetzknoten gelöst.

Zweckmäßigerweise kann dieser erfindungsgemäße Netzknoten als ein Mobilvermittlungsknoten eines Mobilfunknetzes zur Realisierung eines Besucherregisters und/oder eines Gateway ausgeführt sein.

Gleichermaßen wird die Aufgabe von einem zum Empfangen von Signalisierungsnachrichten eingerichteten Netzknoten der eingangs genannten Art von einem Netzknoten mit einer Empfangseinrichtung zum Empfangen seitens des Ausgangsnetzknotens gesendeter Signalisierungsnachrichten gelöst, sowie mit einer Auswerteeinrichtung, welche dazu eingerichtet ist, Signalisierungsnachrichten, welche die vollständige Unterstützung des Satzes verneinenden Stadieninformation enthalten, auf Erweiterungsinformationen, welche jeweils das Vorliegen eines Leistungsmerkmales dieses Satzes anzeigen, zu überprüfen, aufgefundene Erweiterungsinformation(en) auszuwerten und der Erweiterungsinformation(en) entsprechenden Leistungen als verwendbar zu kennzeichnen.

Dieser erfindungsgemäße Netzknoten eignet sich zweckmäßigerweise im besonderen als Heimatregister eines Mobilfunknetzes.

Vorteilhafterweise sind die erfindungsgemäßen Netzknoten zur Signalisierung nach einem standardisierten Protokoll eingerichtet, und die Erweiterungsinformation ist in einem für über das Protokoll hinausgehende Erweiterungen vorgesehenen Teil der Signalisierungsnachricht enthalten.

Des weiteren ist es günstig, wenn ein Netzknoten nach der Erfindung als Netzknoten eines GSM-Netzes zur Signalisierung nach einem Protokoll eines CAMEL-Standards eingerichtet ist und die Stadieninformation die Unterstützung der Leistungsmerkmale einer CAMEL-Phase, z.B. CAMEL Phase 2, betrifft.

Die Vorteile der erfindungsgemäßen Netzknoten entsprechen denen des Verfahrens nach der Erfindung.

Die Erfindung wird im folgenden anhand eines Ausführungsbeispieles auf der Grundlage des bereits einleitend erläuterten CAMEL-Standards des GSM-Netzes näher erläutert.

In dem Ausführungsbeispiel wird eine 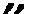 private Erweiterung" der Signalisierungsnachrichten zwischen dem als Besucherregister oder Gateway fungierenden Mobilvermittlungsknoten und dem Heimatregister-Netzknoten verwendet. Die Bezeichnung 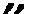 privat" bezieht sich hierbei auf die Möglichkeit, eine hersteller- oder betreiberspezifische und/oder von Vermittlungsknoten zu Vermittlungsknoten variierende Kombination von implementierten Leistungsmerkmalen realisieren zu können.

Die Signalisierungsnachricht kann eine sogenannte 'UpdateLocationArg'-Nachricht oder eine sogenannte 'SendRoutingInfoRes'-Nachricht sein; die Namen sowie die Bedeutung dieser Nachrichten sind in der GSM 09.02 festgelegt. Die 'UpdateLocationArg'-Nachricht wird von einem Besucherregister an das Heimatregister gesendet, wenn ein Teilnehmer sich im Einzugsbereich des Vermittlungsknotens einbucht. Die 'SendRoutingInfoRes'-Nachricht, empfängt ein Gateway von seiten eines Heimatregisters in Beantwortung ('Res' = 'Result') einer Anfrage ('SendRoutingInfo'), die aufgrund eines ankommenden Gespräches für einen Teilnehmer des Netzes an das Heimatregister gesendet wurde und Routing-Information für diesen Teilnehmer anfordert.

Die private Signalisierungserweiterung kann unter Verwendung der von der ETSI vorgeschlagenen Syntaxnotation ASN.1 ('Abstract Syntax Notation 1') wie folgt definiert werden:

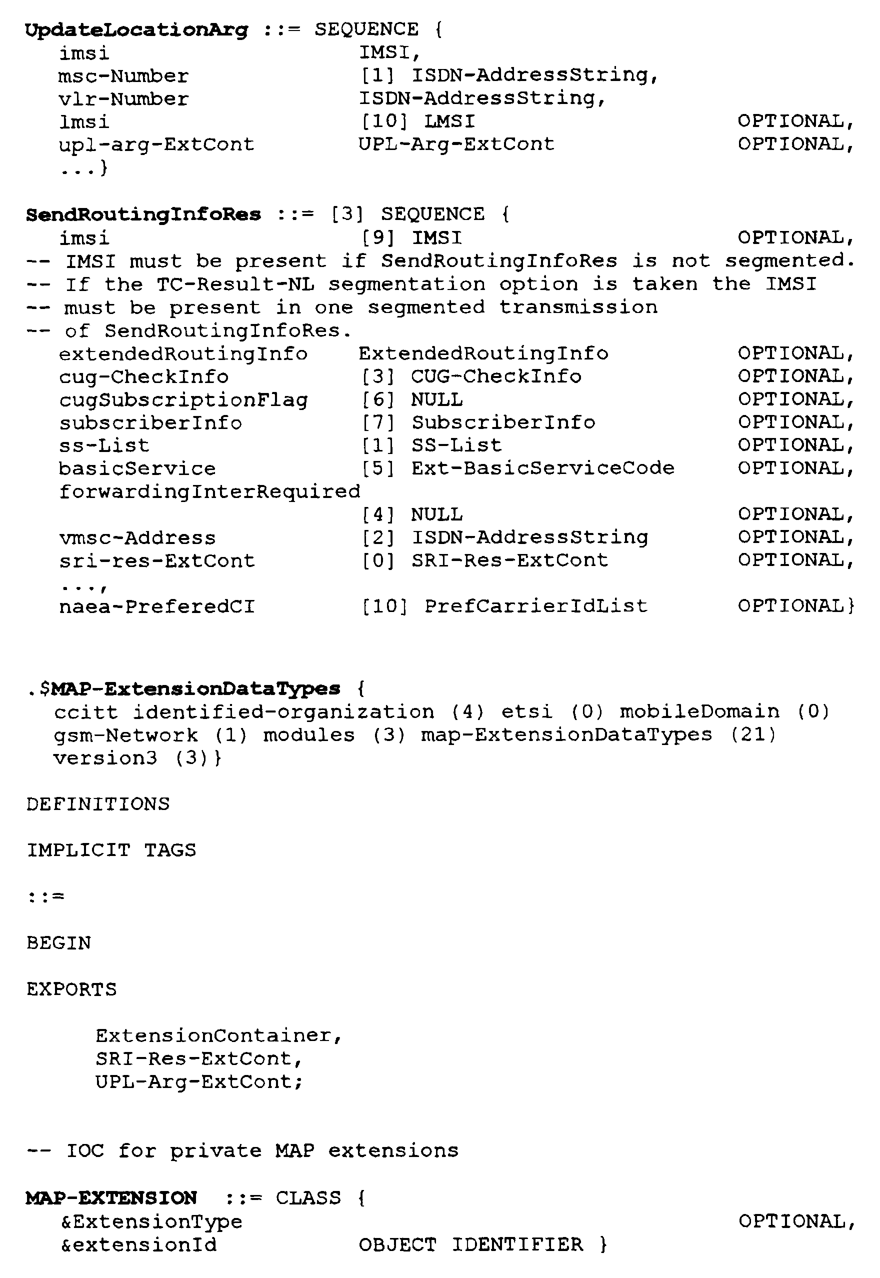

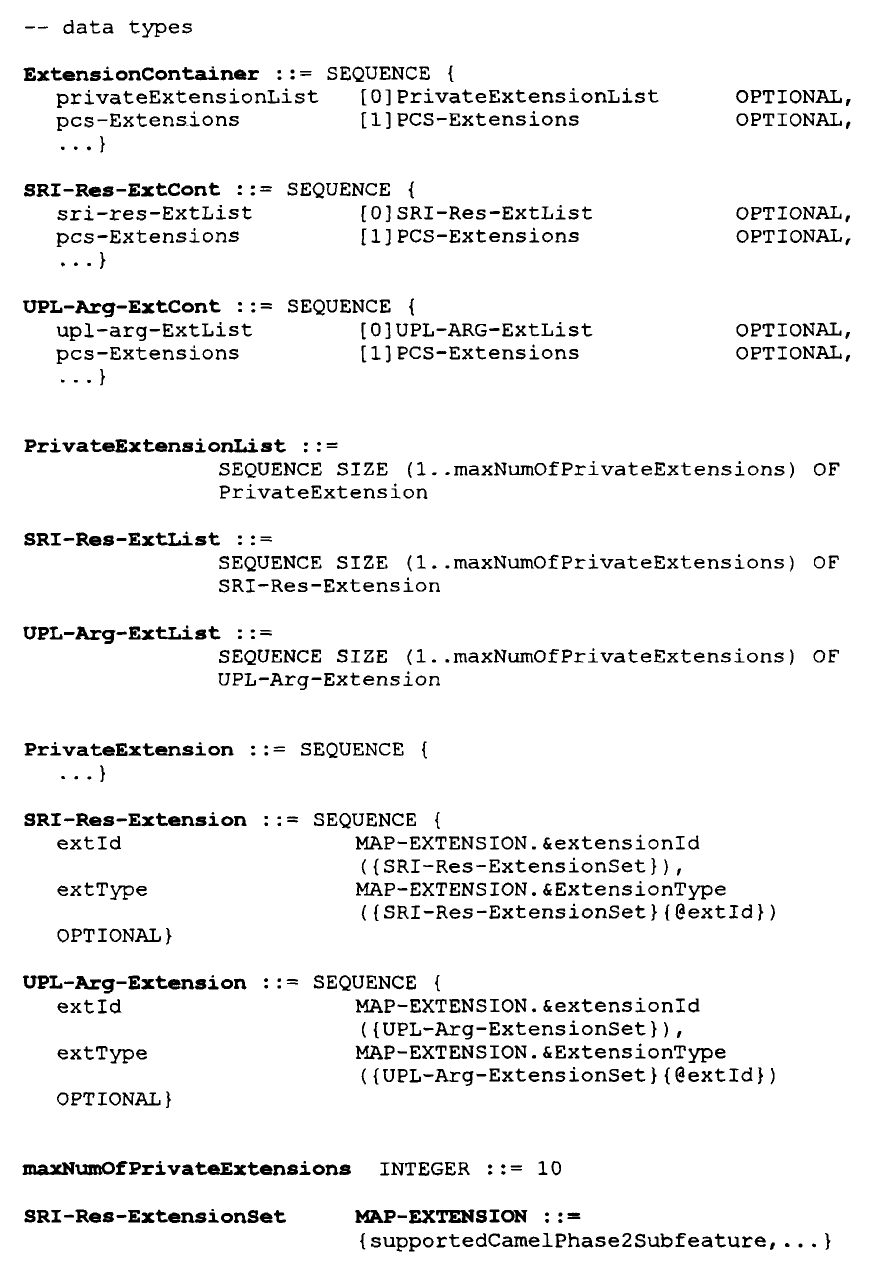

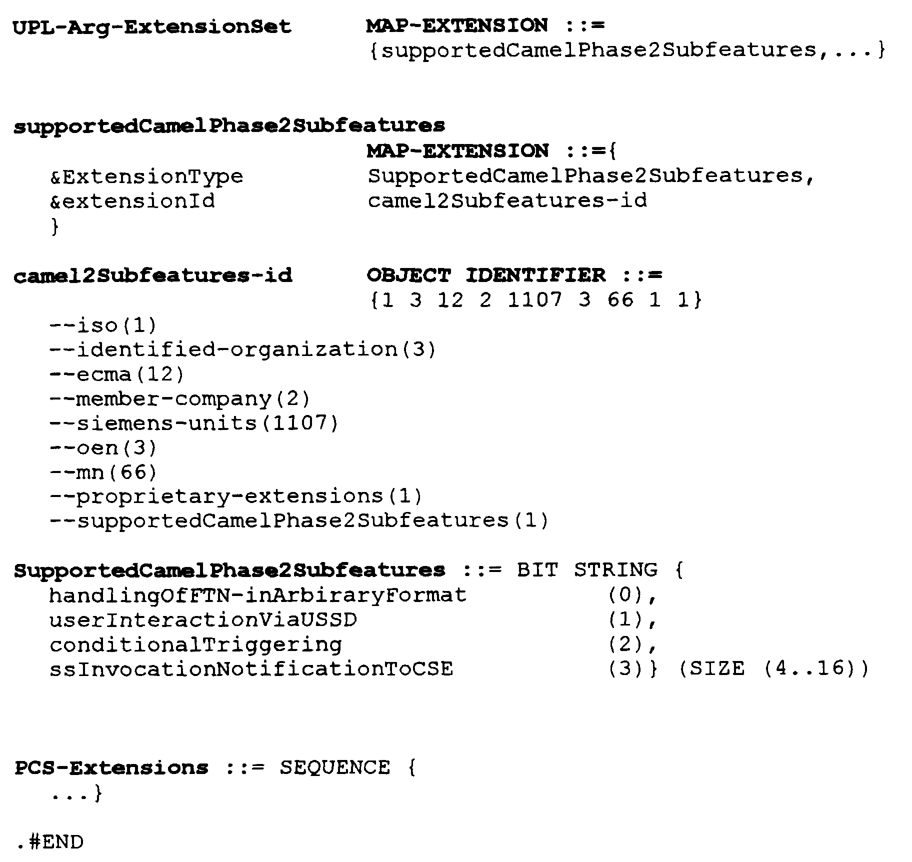

Der betrachtete Mobilvermittlungsknoten unterstützt beispielsweise nur einen Teil der in dem 'SupportedCamelPhase2Subfeatures'-Element genannten Leistungsmerkmale der Phase 2:
- Unterstützung von formatfreien Nummern zur Rufweiterleitung ('handling of FTN in arbitrary format';
   FTN = 'forwarded-to number', Zielnummer der Rufweiterleitung),
- Benutzerdialog mittels USSD ('user interaction via USSD'; USSD = 'Unstructured Supplementary Service Data'), sowie
- Bedingtes Triggern ('conditional triggering') der CAMEL-Aktivierung,
- Benachrichtigung betreffend den Aufruf eines Zusatzdienstes ('SS invocation notification to CSE';
   SS = 'supplementary service', CSE = 'CAMEL service environment', Dienstesteuerknoten des CAMEL).
Nicht enthaltene Leistungsmerkmale gelten gemäß der Erfindung als nicht unterstützt.

Erfindungsgemäß erstellt der Mobilvermittlungsknoten eine Signalisierungsnachricht, welche zum einen im standardisierten Teil der Nachricht die Stadieninformation enthält, daß CAMEL Phase 2 nicht unterstützt wird, und zum anderen in Form einer 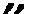 privaten Erweiterung" drei Erweiterungsinformationen aufweist, die jeweils die Unterstützung eines der drei genannten Leistungsmerkmale anzeigt, und sendet diese Signalisierungsnachricht an das Heimatregister.

Ein erfindungsgemäßes Heimatregister, das eine von dem Mobilvermittlungsknoten ausgesendete Signalisierungsnachricht empfängt, untersucht diese auf das Vorhandensein von Erweiterungsinformation. In dem Ausführungsbeispiel ist diese durch einen Erweiterungs-Identifizierer 'camel2Subfeatures-id' angezeigt. Ist das Heimatregister für die Auswertung von Erweiterungen mit dem betreffenden Erweiterungs-Identifizierer eingerichtet, wertet es die Erweiterungsinformationen aus und kann sodann - insoweit nur die von dem Mobilvermittlungsknoten unterstützten Leistungsmerkmale für den Teilnehmer erforderlich sind - die in dem Mobilvermittlungsknoten realisierten Leistungsmerkmale der CAMEL Phase 2 nutzen. In der Erweiterungsinformation ist jedes Leistungsmerkmal durch eine Merkmal-Nummer gemäß dem 'SupportedCamelPhase2Subfeatures'-Element bezeichnet.

Durch die Verwendung der 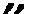 privaten Signalisierungserweiterung" kann der Mobilvermittlungsknoten sich gegenüber jedem Heimatregister oder Dienstesteuerknoten in gleicher Weise verhalten, ohne dadurch gegen den Standard zu verstoßen, obgleich nur einzelne der Leistungsmerkmale der CAMEL Phase 2 nutzbar unterstützt werden. Zugleich können unter Umständen anhand des Erweiterungs-Identifizierers verschiedene Versionen der Zuordnung der Leistungsmerkmale zu Merkmal-Nummer unterschieden werden.

## Patentansprüche

1. Verfahren zur Signalisierung der Unterstützung netzbezogener Leistungsmerkmale seitens eines Ausgangsnetzknotens eines Telekommunikationsnetzes, bei welchem von dem Ausgangsnetzknoten aufgrund der in diesem unterstützten Leistungsmerkmale eine Signalisierungsnachricht erstellt wird, welche zumindest eine die vollständige Unterstützung eines vorbestimmten Satzes von Leistungsmerkmalen betreffende Stadieninformation enthält, und die Signalisierungsnachricht an einen oder mehrere andere Ziel-Netzknoten gesendet und von diesen empfangen und ausgewertet wird,
**dadurch gekennzeichnet**, daß
• seitens des Ausgangsnetzknotens die Signalisierungsnachricht zwar mit einer die vollständige Unterstützung des Satzes verneinenden Stadieninformation, jedoch mit zumindest einer Erweiterungsinformation, welche jeweils das Vorliegen eines Leistungsmerkmales dieses Satzes anzeigt, erstellt wird und/oder
• die seitens eines Zielnetzknotens empfangene Signalisierungsnachricht, falls sie eine die vollständige Unterstützung des Satzes verneinende Stadieninformation enthält, auf das Vorhandensein zumindest einer Erweiterungsinformation überprüft wird und, sofern dies zutrifft, die zumindest eine Erweiterungsinformation ausgewertet wird und der Erweiterungsinformation(en) entsprechenden Leistungen als verwendbar gekennzeichnet werden.

2. Verfahren nach Anspruch 1,
**dadurch gekennzeichnet**, daß die Signalisierung nach einem standardisierten Protokoll erfolgt und die Erweiterungsinformation einem für über das Protokoll hinausgehende Erweiterungen vorgesehenen Teil der Signalisierungsnachricht eingesetzt bzw. entnommen wird.

3. Verfahren nach Anspruch 1 oder 2,
**dadurch gekennzeichnet**, daß die Signalisierung in einem GSM-Netz nach einem Protokoll eines CAMEL-Standards erfolgt und die Stadieninformation die Unterstützung der Leistungsmerkmale einer CAMEL-Phase, z.B. CAMEL Phase 2, betrifft.

4. Netzknoten für ein Telekommunikationsnetz, welcher zum Senden von Signalisierungsnachrichten eingerichtet ist, welche zumindest eine Stadieninformation betreffend die vollständige Unterstützung eines vorbestimmten Satzes netzbezogener Leistungsmerkmale im Netzknoten enthalten,
**gekennzeichnet durch**
eine Erstelleinrichtung zum Erstellen von Signalisierungsnachrichten, welche zwar eine vollständige Unterstützung des Satzes verneinen, jedoch zumindest eine Erweiterungsinformation, welche jeweils das Vorliegen eines Leistungsmerkmales dieses Satzes anzeigt, enthalten, sowie **durch** eine Sendeeinrichtung zum Senden der Signalisierungsnachrichten an einen oder mehrere andere Zielnetzknoten.

5. Netzknoten nach Anspruch 4,
**dadurch gekennzeichnet**, daß er als ein Mobilvermittlungsknoten eines Mobilfunknetzes zur Realisierung eines Besucherregisters und/oder eines Gateway ausgeführt ist.

6. Netzknoten für ein Telekommunikationsnetz, welcher zum Empfangen von Signalisierungsnachrichten eingerichtet ist, welche zumindest eine Stadieninformation betreffend die vollständige Unterstützung eines vorbestimmten Satzes netzbezogener Leistungsmerkmale auf seiten eines Ausgangsnetzknotens enthalten, und welcher
**gekennzeichnet durch**
eine Empfangseinrichtung zum Empfangen seitens des Ausgangsnetzknotens gesendeter Signalisierungsnachrichten, sowie **durch** eine Auswerteeinrichtung, welche dazu eingerichtet ist, Signalisierungsnachrichten, welche die vollständige Unterstützung des Satzes verneinenden Stadieninformation enthalten, auf Erweiterungsinformationen, welche jeweils das Vorliegen eines Leistungsmerkmales dieses Satzes anzeigen, zu überprüfen, aufgefundene Erweiterungsinformation(en) auszuwerten und der Erweiterungsinformation(en) entsprechenden Leistungen als verwendbar zu kennzeichnen.

7. Netzknoten nach Anspruch 6,
**dadurch gekennzeichnet**, daß er als Heimatregister eines Mobilfunknetzes ausgebildet ist.

8. Netzknoten nach einem der Ansprüche 4 bis 7,
**dadurch gekennzeichnet**, daß er zur Signalisierung nach einem standardisierten Protokoll eingerichtet ist und die Erweiterungsinformation in einem für über das Protokoll hinausgehende Erweiterungen vorgesehenen Teil der Signalisierungsnachricht enthalten ist.

9. Netzknoten nach einem der Ansprüche 4 bis 8,
**dadurch gekennzeichnet**, daß er als Netzknoten eines GSM-Netzes zur Signalisierung nach einem Protokoll eines CAMEL-Standards eingerichtet ist und die Stadieninformation die Unterstützung der Leistungsmerkmale einer CAMEL-Phase, z.B. CAMEL Phase 2, betrifft.
